(19) **Europäisches Patentamt / European Patent Office / Office européen des brevets**

(11) **EP 4 202 173 B1**

(12) **FASCICULE DE BREVET EUROPEEN**

(45) Date de publication et mention
de la délivrance du brevet:
**01.01.2025 Bulletin 2025/01**

(21) Numéro de dépôt: **22215374.4**

(22) Date de dépôt: **21.12.2022**

(51) Classification Internationale des Brevets (IPC):
*E06B 9/322* (2006.01)   *H02K 15/14* (2006.01)
*H02K 5/10* (2006.01)   *H02K 5/22* (2006.01)

(52) Classification Coopérative des Brevets (CPC):
**E06B 9/322; H02K 5/10; H02K 5/225;**
H02K 2207/03

(54) **ACTIONNEUR ÉLECTROMÉCANIQUE, DISPOSITIF D'OCCULTATION COMPRENANT UN TEL ACTIONNEUR ET PROCÉDÉ D'ASSEMBLAGE D'UN TEL ACTIONNEUR**

ELEKTROMECHANISCHER AKTUATOR, VERDUNKELUNGSVORRICHTUNG MIT SOLCH EINEM AKTUATOR UND VERFAHREN ZUR MONTAGE SOLCH EINES AKTUATORS

ELECTROMECHANICAL ACTUATOR, CONCEALMENT DEVICE COMPRISING SUCH AN ACTUATOR AND METHOD FOR ASSEMBLING SUCH AN ACTUATOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.12.2021 FR 2114290**

(43) Date de publication de la demande:
**28.06.2023 Bulletin 2023/26**

(73) Titulaire: **Somfy Activites SA**
**74300 Cluses (FR)**

(72) Inventeurs:
• **ZAWISZA, Mariusz**
**74300 Cluses (FR)**
• **CZECH, Giovanni**
**74300 Cluses (FR)**

(74) Mandataire: **Lavoix**
**62, rue de Bonnel**
**69448 Lyon Cedex 03 (FR)**

(56) Documents cités:
**EP-A1- 1 764 474    FR-A1- 2 891 413**
**FR-A1- 2 923 329**

**Description**

La présente invention concerne un actionneur électromécanique d'un dispositif d'occultation, autrement dit un actionneur électromécanique pour un dispositif d'occultation.

La présente invention concerne également un dispositif d'occultation comprenant un rail et un écran. L'écran est entraîné en déplacement par un tel actionneur électromécanique disposé à l'intérieur du rail.

La présente invention concerne, en outre, un procédé d'assemblage d'un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de protection solaire ou de fermeture, tel qu'un store, en particulier à lames, un volet, une porte, une grille, un rideau ou tout autre matériel équivalent, appelé par la suite écran.

Pour alimenter en énergie électrique un dispositif d'entraînement motorisé, il est possible d'utiliser un câble d'alimentation électrique enfiché sur des broches de l'actionneur électromécanique, avec un risque d'arrachement non négligeable. En outre, les broches peuvent être souillées par des polluants ou mouillées par des écoulements d'eau.

Ce type d'actionneur électromécanique présente l'inconvénient que l'ancrage du câble d'alimentation électrique sur le carter n'est pas pérenne, au point qu'un arrachement du câble d'alimentation électrique ne peut pas être exclu. En outre, il existe un risque de torsion du câble d'alimentation électrique, au niveau de son passage à travers la paroi du carter, ce qui peut endommager le câble d'alimentation électrique ou ses broches de raccordement à l'unité de contrôle. Enfin, des écoulements d'eau ou d'autre liquides risquent de pénétrer dans le carter en passant par la zone de jonction entre le câble d'alimentation électrique et le carter.

Par conséquent, la jonction entre le câble d'alimentation électrique et le carter ne donne pas entièrement satisfaction.

On connaît déjà le document EP-A2-0 844 633 qui décrit un actionneur électromécanique d'un dispositif d'occultation comprenant un moteur électrique, une unité de contrôle configurée pour commander le moteur électrique, un carter à l'intérieur duquel sont logés le moteur électrique et l'unité de contrôle, ainsi qu'un câble d'alimentation électrique qui traverse une paroi du carter, en étant connecté à l'unité de contrôle.

Ce document présente une solution où la jonction entre le câble d'alimentation électrique et le carter est mise en oeuvre au moyen d'une bague enfilée autour du câble d'alimentation électrique, puis celle-ci est vissée, au moyen d'un filetage sur sa surface externe, dans un trou taraudé d'un plot du carter.

Certes l'ancrage du câble d'alimentation électrique peut être pérenne, car un arrachement est difficilement réalisable.

Par contre, un tel assemblage est long, fastidieux et peu ergonomique pour l'opérateur, du fait de l'opération de vissage.

Par conséquent, le coût de cet assemblage de l'actionneur électromécanique est élevé.

En outre, un joint d'étanchéité est enfilé autour du câble d'alimentation électrique et assemblé à l'intérieur du trou taraudé du plot ménagé dans le carter, pour garantir l'étanchéité entre la bague placée autour du câble d'alimentation électrique et le plot du carter, par écrasement du joint d'étanchéité. Un tel assemblage nécessite de ne pas oublier de placer le joint d'étanchéité dans le trou taraudé du plot du carter, lors de l'assemblage, faute de quoi l'étanchéité n'est pas assurée.

On connaît également le document EP 1 764 474 A1 qui décrit un actionneur électromécanique d'un dispositif d'occultation. L'actionneur électromécanique comprend un moteur électrique, une unité de contrôle, un carter, une console, un bouchon et un câble d'alimentation électrique. L'unité de contrôle est configurée pour commander le moteur électrique. Le moteur électrique et l'unité de contrôle sont logés à l'intérieur du carter. Le câble d'alimentation électrique traverse la console et est connecté électriquement à l'unité de contrôle. Le bouchon est configuré pour être rapporté sur la console, de sorte à obturer une ouverture d'un logement de la console, afin qu'un passage du câble d'alimentation électrique soit défini lorsque le bouchon est assemblé sur la console.

La présente invention a pour but de résoudre les inconvénients précités et de proposer un actionneur électromécanique pour un dispositif d'occultation, un dispositif d'occultation comprenant un tel actionneur électromécanique, ainsi qu'un procédé d'assemblage d'un tel actionneur électromécanique, permettant de garantir un ancrage pérenne et étanche du câble d'alimentation électrique sur le carter et d'éviter sa torsion, grâce à une structure fiable, économique et facile à industrialiser.

A cet effet, la présente invention concerne, selon un premier aspect, un actionneur électromécanique pour un dispositif d'occultation,
l'actionneur électromécanique comprenant au moins :

- un moteur électrique,

- une unité de contrôle, l'unité de contrôle étant configurée pour commander le moteur électrique,
- un carter, dans lequel sont logés le moteur électrique et l'unité de contrôle,
- un câble d'alimentation électrique, le câble d'alimentation électrique traversant une paroi du carter et étant connecté électriquement à l'unité de contrôle, la paroi du carter présentant un côté interne, orienté vers l'intérieur du carter, et un côté externe, orienté vers l'extérieur du carter, le côté interne étant opposé au côté externe, et
- un organe de retenue.

Selon l'invention,

l'actionneur électromécanique comprend, en outre :

- un embout, l'embout étant immobilisé sur le câble d'alimentation électrique, le carter comprend au moins :

  - un logement à section non-circulaire, le logement à section non-circulaire étant ménagé dans la paroi du carter, et
  - une ouverture traversante, l'ouverture traversante étant ménagée dans la paroi du carter,

l'embout comprend au moins :

- une partie à section non-circulaire, la partie à section non-circulaire de l'embout étant engagée dans le logement à section non-circulaire ménagé dans la paroi du carter, et
- un fût, le fût étant engagé dans l'ouverture traversante de la paroi du carter, une partie du fût dépassant de l'ouverture traversante sur le côté interne de la paroi du carter, l'organe de retenue étant monté sur la partie du fût,

en outre, le fût porte au moins une lèvre d'étanchéité, la ou chaque lèvre d'étanchéité étant en contact avec une surface délimitant l'ouverture traversante ménagée dans la paroi du carter.

Ainsi, l'embout du câble d'alimentation électrique permet d'assurer une triple fonction d'anti-arrachement du câble d'alimentation électrique, d'anti-rotation et d'étanchéité, vis-à-vis de la paroi du carter.

De cette manière, l'embout du câble d'alimentation électrique permet de fiabiliser la liaison mécanique entre le câble d'alimentation électrique et le carter, tout en évitant des risques liés à un défaut d'étanchéité, notamment de fuite de liquide ou de passage de poussière, vers l'intérieur du carter, de sorte à protéger efficacement le moteur électrique et l'unité de contrôle contre des coupures d'alimentation électrique et contre une pollution.

Par conséquent, le fonctionnement de l'actionneur électromécanique est fiabilisé et celui-ci peut satisfaire à un indice de protection donné, par exemple du type IP54, au sens de la norme EN 60335.

Selon des aspects avantageux mais non obligatoires de l'invention, un tel actionneur électromécanique peut incorporer une ou plusieurs des caractéristiques suivantes, prises selon toute combinaison techniquement admissible :

- l'embout comprend, en outre, une armature, l'armature étant serrée autour du câble d'alimentation électrique.
- l'embout comprend, en outre, une pièce, la pièce constituant au moins la partie à section non-circulaire de l'embout et le fût de l'embout, la pièce étant immobilisée sur le câble d'alimentation électrique.
- le logement à section non-circulaire ménagé dans la paroi du carter constitue une embouchure de l'ouverture traversante ménagée dans la paroi du carter, à partir du côté externe de la paroi du carter.
- la partie à section non-circulaire de l'embout est un talon. En outre, la ou les lèvres d'étanchéité sont ménagées sur une portion du fût distincte de la partie du fût dépassant de l'ouverture traversante sur le côté interne de la paroi du carter.
- la ou chaque lèvre d'étanchéité est ménagée sur le fût, à proximité de la partie à section non-circulaire de l'embout.
- le fût comprend, sur la partie du fût dépassant de l'ouverture traversante sur le côté interne de la paroi du carter, au moins une portion de collerette. En outre, l'organe de retenue est intercalé entre la ou chaque portion de collerette du fût et un relief de la paroi du carter, lorsque l'embout est assemblé avec la paroi du carter.
- l'organe de retenue est une bague élastiquement déformable, entre une première configuration, où son diamètre interne est inférieur ou égal à un diamètre du fût, sur une zone formée par le fût pour la réception de l'organe de retenue, et une deuxième configuration, où son diamètre interne est strictement supérieur à un diamètre maximum du fût.

La présente invention concerne, selon un deuxième aspect, un dispositif d'occultation, le dispositif d'occultation comprenant au moins :

- un rail,
- un écran, et
- un actionneur électromécanique conforme à l'invention et tel que mentionné ci-dessus, l'actionneur électromécanique étant disposé à l'intérieur du rail, l'écran étant entraîné en déplacement par l'actionneur électromécanique.

Selon un troisième aspect, l'invention concerne un procédé d'assemblage d'un actionneur électromécanique pour un dispositif d'occultation, tel que mentionné ci-dessus.

Selon l'invention, le procédé comprend au moins les étapes suivantes :

- insérer des conducteurs électriques du câble d'alimentation électrique dans l'ouverture traversante ménagée dans la paroi du carter, jusqu'à ce que la partie à section non-circulaire de l'embout du câble d'alimentation électrique soit reçue dans le logement à section non-circulaire ménagé dans la paroi du carter et que la ou chaque lèvre d'étanchéité soit en contact avec la surface, délimitant l'ouverture traversante ménagée dans la paroi du carter, et
- monter l'organe de retenue sur la partie du fût dépassant de l'ouverture traversante sur le côté interne de la paroi du carter, en verrouillant axialement l'embout par rapport à la paroi du carter, dans la position atteinte au terme de l'étape d'insertion.

Ce procédé d'assemblage est rapide à mettre en oeuvre et permet d'obtenir un ancrage pérenne et étanche du câble d'alimentation électrique, notamment sans risque de fuite d'un liquide ou de passage de poussière, par rapport à la paroi du carter, avec un nombre d'étapes limité, chaque étape étant simple à industrialiser, en particulier manuellement, par un opérateur.

D'autres particularités et avantages de l'invention apparaîtront encore dans la description ci-après, donnée à titre d'exemple non limitatif et faite en référence aux dessins annexés, dans lesquels :

[Fig 1] la figure 1 est une vue schématique en perspective d'un dispositif d'occultation conforme à un mode de réalisation de l'invention ;

[Fig 2] la figure 2 est une vue schématique en perspective d'un actionneur électromécanique du dispositif d'occultation illustré à la figure 1 ;

[Fig 3] la figure 3 est une vue schématique en coupe axiale de l'actionneur électromécanique illustré à la figure 2, selon le plan III représenté à la figure 2 ;

[Fig 4] la figure 4 est une vue schématique en perspective de l'actionneur électromécanique des figures 2 et 3, selon un angle de vue différent de celui de la figure 2 ;

[Fig 5] la figure 5 est une vue schématique en perspective d'un câble d'alimentation électrique, d'une paroi d'un carter et d'un organe de retenue de l'actionneur électromécanique des figures 2 à 4, selon un angle de vue différent des figures 2 à 4 ;

[Fig 6] la figure 6 est une vue schématique en perspective éclatée du câble d'alimentation électrique, de la paroi du carter et de l'organe de retenue de la figure 5 ;

[Fig 7] la figure 7 est une autre vue schématique en perspective éclatée du câble d'alimentation électrique, de la paroi du carter et de l'organe de retenue des figures 5 et 6, selon un angle de vue différent de la figure 6 ; et

[Fig 8] la figure 8 est une vue schématique de côté, dans le sens de la flèche VIII à la figure 4, du câble d'alimentation électrique, de la paroi du carter et de l'organe de retenue des figures 5 à 7, au cours de l'assemblage du câble d'alimentation électrique sur la paroi du carter.

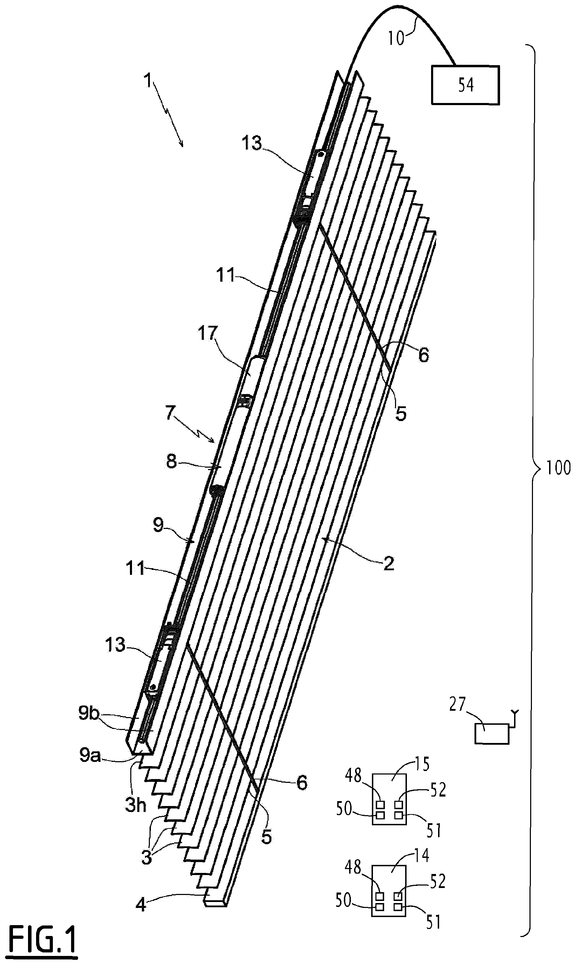

On décrit tout d'abord, en référence à la figure 1, une installation 100 installée dans un bâtiment, non représenté. Cette installation 100 comporte une ouverture, fenêtre ou porte, équipée d'un écran 2 appartenant à un dispositif d'occultation 1, conforme à un mode de réalisation de l'invention, dans l'exemple un dispositif d'occultation 1 de type store vénitien formant un store à lames.

En variante, non représentée, le dispositif d'occultation 1 peut être, notamment, un store plissé, un volet roulant, un portail roulant, une grille ou une porte.

Le dispositif d'occultation 1 est, préférentiellement, disposé à l'extérieur du bâtiment.

En variante, le dispositif d'occultation 1 est disposé à l'intérieur du bâtiment.

Le dispositif d'occultation 1 comprend des lames 3, en particulier orientables. Le dispositif d'occultation 1 comprend, en outre, une barre de charge 4. Ici, l'écran 2 est formé des lames 3 et de la barre de charge 4. La barre de charge 4 permet d'exercer une tension sur l'écran 2.

En pratique, la barre de charge 4 est fixée au niveau d'une extrémité inférieure de l'écran 2, en particulier dans une configuration assemblée du dispositif d'occultation 1 dans l'installation 100.

En variante, non représentée, l'écran 2 comprend une lame finale en remplacement de la barre de charge 4, celle-ci pouvant être lestée.

Le dispositif d'occultation 1 comprend des cordons d'entraînement 5 configurés pour permettre un déplacement vertical des lames 3 et de la barre de charge 4. Les cordons d'entraînement 5 peuvent également être appelés des lacettes.

En pratique, les lames 3 comprennent respectivement des ouvertures, non représentées, de passage de chaque cordon d'entraînement 5.

Dans l'exemple de réalisation illustré à la figure 1, le dispositif d'occultation 1 comprend, en outre, des cordons d'orientation 6 configurés pour permettre l'orientation des lames 3. Les cordons d'orientation 6 sont également appelés échelles.

Avantageusement, dans la configuration assemblée du dispositif d'occultation 1 dans l'installation 100, chaque lame 3 de l'écran 2 repose sur une partie de cordon d'orientation 6, en particulier horizontale et pouvant être appelée barreau, reliant deux brins de cordon d'orientation 6, en particulier verticaux.

Ainsi, les cordons d'orientation 6 permettent de garantir un espacement vertical régulier des lames 3 de l'écran 2.

L'orientation des lames 3 permet, notamment, d'ajuster la luminosité à l'intérieur d'une pièce du bâtiment.

Lors de la remontée de l'écran 2 et, en particulier, de la barre de charge 4, les lames 3 se superposent sur la barre de charge 4, de sorte à former un empilement.

Dans un exemple de réalisation, non représenté, le dispositif d'occultation 1 comprend deux coulisses. Chacune des coulisses est disposée le long d'un côté de l'écran 2 du dispositif d'occultation 1. Les coulisses sont configurées pour coopérer avec les lames 3 de l'écran 2, de sorte à guider les lames 3, lors du déploiement et du repli de l'écran 2.

Dans un autre exemple de réalisation, également non représenté, le guidage des lames 3 est réalisé par deux câbles. Chacun des câbles est disposé le long d'un côté de l'écran 2 du dispositif d'occultation 1.

Le dispositif d'occultation 1 comprend un dispositif d'entraînement motorisé 7.

Le dispositif d'entraînement motorisé 7 comprend au moins un actionneur électromécanique 8. L'actionneur électromécanique 8 est configuré pour entraîner, autrement dit entraîne, en déplacement l'écran 2. En particulier, l'actionneur électromécanique 8 permet de faire descendre ou monter les lames 3 et la barre de charge 4, autrement dit de déployer ou de replier l'écran 2, selon un mouvement vertical. L'actionneur électromécanique 8 permet, en outre, d'orienter les lames 3.

Le dispositif d'occultation 1 comprend, en outre, un rail 9, à l'intérieur duquel est disposé le dispositif d'entraînement motorisé 7, notamment l'actionneur électromécanique 8, en particulier dans une configuration assemblée du dispositif d'occultation 1.

Le rail 9 est disposé, autrement dit est configuré pour être disposé, au-dessus de l'écran 2, en particulier dans la configuration assemblée du dispositif d'occultation 1.

De manière générale, le rail 9 est disposé au-dessus de l'ouverture du bâtiment, ou encore en partie supérieure de l'ouverture du bâtiment.

Avantageusement, le rail 9 comprend au moins une paroi de fond 9a et deux parois latérales 9b.

Dans le mode de montage illustré à la figure 1, le rail 9 présente une section en forme de « U ».

Avantageusement, le dispositif d'entraînement motorisé 7 comprend, en outre, une pluralité d'enrouleurs. Les enrouleurs sont configurés pour enrouler et dérouler les cordons d'entraînement 5, de sorte à entraîner le déplacement vertical des lames 3 et de la barre de charge 4.

Ici, le dispositif d'entraînement motorisé 7 comprend deux enrouleurs, non visibles sur la figure 1.

Le nombre d'enrouleurs n'est pas limitatif et peut être différent, en particulier supérieur à deux.

Préférentiellement, les enrouleurs sont disposés à l'intérieur du rail 9.

Les cordons d'entraînement 5 sont reliés, d'une part, à la barre de charge 4 et, d'autre part, aux enrouleurs.

En pratique, dans la configuration assemblée du dispositif d'occultation 1 dans l'installation 100, l'extrémité inférieure de chaque cordon d'entraînement 5 est reliée à la barre de charge 4 et l'extrémité supérieure de chaque cordon d'entraînement 5 est reliée à l'un des enrouleurs.

Avantageusement, le dispositif d'entraînement motorisé 7 comprend des dispositifs de basculement 13, généralement dénommés « basculateurs ». Chaque enrouleur est respectivement disposé à l'intérieur d'un basculateur 13. C'est pourquoi les enrouleurs ne sont pas visibles à la figure 1.

En outre, les basculateurs 13 sont disposés, autrement dit sont configurés pour être disposés, à l'intérieur du rail 9, en particulier dans la configuration assemblée du dispositif d'occultation 1.

Dans l'exemple de réalisation illustré à la figure 1, le dispositif d'entraînement motorisé 7 comprend deux basculateurs 13.

Le nombre de basculateurs n'est pas limitatif et peut être différent, en particulier strictement supérieur à deux. Dans le cas où le nombre de basculateurs est supérieur ou égal à deux, l'actionneur électromécanique peut être disposé entre deux des basculateurs.

Ici, les basculateurs 13 sont disposés de part et d'autre de l'actionneur électromécanique 8. Préférentiellement, chaque basculateur 13 est disposé au voisinage d'une extrémité du rail 9, suivant la direction longitudinale de celui-ci.

Les basculateurs 13 sont configurés pour entraîner en rotation, sur une plage de valeur d'angle de rotation limitée, les cordons d'orientation 6, de sorte à orienter les lames 3.

Le dispositif d'entraînement motorisé 7, en particulier l'actionneur électromécanique 8, est commandé par une unité de commande. Autrement dit, l'unité de commande est configurée pour commander, c'est-à-dire commande, le dispositif d'entraînement motorisé 7, en particulier l'actionneur électromécanique 8.

L'unité de commande peut être, par exemple, une unité de commande locale 14 ou une unité de commande centrale 15.

L'unité de commande locale 14 peut être reliée, en liaison filaire ou non filaire, avec l'unité de commande centrale 15. L'unité de commande centrale 15 peut piloter l'unité de commande locale 14, ainsi que d'autres unités de commande locales similaires et réparties dans le bâtiment.

Le dispositif d'entraînement motorisé 7 est, de préférence, configuré pour exécuter les commandes de déplacement, notamment de montée ou descente et, éventuellement, d'orientation, de l'écran 2 du dispositif d'occultation 1, pouvant être émises, notamment, par l'unité de commande locale 14 ou l'unité de commande centrale 15.

L'installation 100 et, plus particulièrement, le dispositif d'occultation 1 comprend soit l'unité de commande locale 14, soit l'unité de commande centrale 15, soit l'unité de commande locale 14 et l'unité de commande centrale 15.

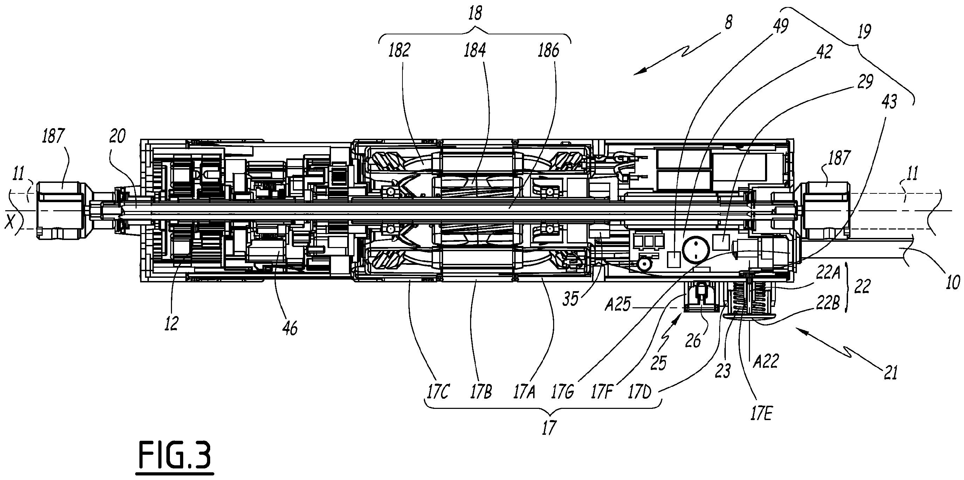

Des moyens de commande de l'actionneur électromécanique 8, permettant le déplacement de l'écran 2 du dispositif d'occultation 1 ainsi que l'orientation des lames 3 de l'écran 2, comprennent au moins une unité de contrôle 19, en particulier une unité électronique de contrôle, illustrée à la figure 3. L'unité de contrôle 19 est apte à mettre en fonctionnement un moteur électrique 18 de l'actionneur électromécanique 8 et, en particulier, permettre l'alimentation en énergie électrique du moteur électrique 18.

Avantageusement, le moteur électrique 18 peut être de type sans balais à commutation électronique, appelé également « BLDC » (acronyme du terme anglo-saxon BrushLess Direct Current) ou « synchrone à aimants permanents », de type asynchrone ou de type à courant continu.

Avantageusement, l'unité de contrôle 19 est intégrée à l'actionneur électromécanique 8.

Ainsi, l'unité de contrôle 19 commande, notamment, le moteur électrique 18, de sorte à ouvrir ou fermer l'écran 2, ainsi que de sorte à orienter les lames 3 de l'écran 2, comme décrit précédemment.

Ici, l'unité de contrôle 19 comprend une carte de circuit imprimé 42 qui supporte divers composants électroniques nécessaires à la commande du moteur électrique 18, dont ceux mentionnés ci-après.

En variante, non représentée, l'unité de contrôle 19 peut comprendre plusieurs cartes de circuit imprimé.

Avantageusement, l'unité de contrôle 19 comprend au moins un module de communication 49, en particulier de réception d'ordres de commande, les ordres de commande étant émis par un émetteur d'ordres, tel que l'unité de commande locale 14 ou centrale 15, ces ordres étant destinés à commander le dispositif d'entraînement motorisé 7.

Avantageusement, le module de communication 49 de l'unité de contrôle 19 est de type filaire, autrement dit permet la réception et, éventuellement, l'émission d'ordres de commande transmis par des moyens filaires.

Avantageusement, l'unité de contrôle 19, l'unité de commande locale 14 et/ou l'unité de commande centrale 15 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité ou encore une vitesse de vent, dans le cas où la station météorologique est déportée à l'extérieur du bâtiment.

L'unité de contrôle 19, l'unité de commande locale 14 et/ou l'unité de commande centrale 15 peuvent également être en communication avec un serveur 27, de sorte à contrôler l'actionneur électromécanique 8 suivant des données mises à disposition à distance par l'intermédiaire d'un réseau de communication, en particulier un réseau internet pouvant être relié au serveur 27.

L'unité de contrôle 19 peut être commandée à partir de l'unité de commande locale 14 ou centrale 15. L'unité de commande locale 14 ou centrale 15 est pourvue d'un clavier de commande. Le clavier de commande de l'unité de commande locale 14 ou centrale 15 comprend un ou plusieurs éléments de sélection 50 et, éventuellement, un ou plusieurs éléments d'affichage 51.

A titre d'exemples nullement limitatifs, les éléments de sélection peuvent être des boutons poussoirs ou des touches sensitives, les éléments d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 14 ou centrale 15 comprend au moins un module de communication 48.

Ainsi, le module de communication 48 de l'unité de commande locale 14 ou centrale 15 est configuré pour émettre, autrement dit émet, des ordres de commande, en particulier par des moyens filaires.

En outre, le module de communication 48 de l'unité de commande locale 14 ou centrale 15 peut également être configuré pour recevoir, autrement dit reçoit, des ordres de commande, en particulier par l'intermédiaire des mêmes moyens.

Le module de communication 48 de l'unité de commande locale 14 ou centrale 15 est appelé par la suite premier module de communication. En outre, le module de communication 49 de l'unité de contrôle 19 est appelé par la suite deuxième module de communication.

Le premier module de communication 48 de l'unité de commande locale 14 ou centrale 15 est configuré pour communiquer, autrement dit communique, avec le deuxième module de communication 49 de l'unité de contrôle 19.

Ainsi, le premier module de communication 48 de l'unité de commande locale 14 ou centrale 15 échange des ordres de commande avec le deuxième module de communication 49 de l'unité de contrôle 19, soit de manière monodirectionnelle, soit de manière bidirectionnelle.

Avantageusement, l'unité de commande locale 14 est un point de commande, pouvant être fixe ou nomade. Un point de commande fixe peut être un boîtier de commande destiné à être fixé sur une façade d'un mur du bâtiment ou sur une face du cadre dormant d'une fenêtre ou d'une porte. Un point de commande nomade peut être une télécommande, un téléphone intelligent ou une tablette.

Avantageusement, l'unité de commande locale 14 ou centrale 15 comprend, en outre, un contrôleur 52.

Les moyens de commande de l'actionneur électromécanique 8 comprennent des moyens matériels et/ou logiciels.

A titre d'exemple nullement limitatif, les moyens matériels peuvent comprendre au moins un microcontrôleur 29 monté sur la carte de circuit imprimé 42.

Le dispositif d'entraînement motorisé 7, en particulier l'unité de contrôle 19, est, de préférence, configuré pour exécuter des ordres de commande de déplacement, notamment de déploiement ou de repli de l'écran 2 du dispositif d'occultation 1, ainsi que d'orientation des lames 3. Ces ordres de commande peuvent être émis, notamment, par l'unité de commande locale 14 ou par l'unité de commande centrale 15.

Le dispositif d'entraînement motorisé 7 peut être contrôlé par l'utilisateur, par exemple par la réception d'un ordre de commande correspondant à un appui sur le ou l'un des éléments de sélection 50 de l'unité de commande locale 14 ou centrale 15.

Le dispositif d'entraînement motorisé 7 peut également être contrôlé automatiquement, par exemple par la réception d'un ordre de commande correspondant à au moins un signal provenant d'au moins un capteur, non représenté, et/ou à un signal provenant d'une horloge, non représentée. Le capteur et/ou l'horloge peuvent, en variante, être intégrés à l'unité de commande locale 14 ou à l'unité de commande centrale 15.

Le capteur et/ou l'horloge peuvent également être considérés comme correspondant à une unité de commande, en particulier une unité de commande locale 14.

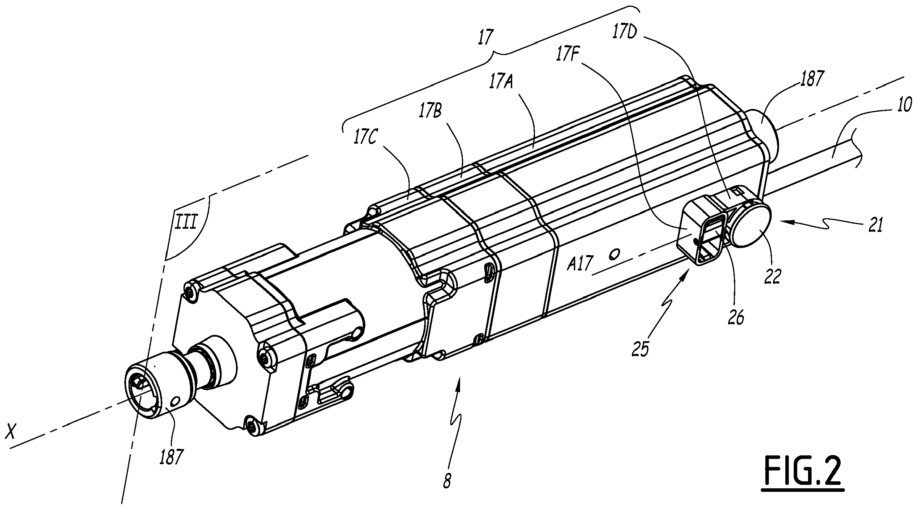

On décrit à présent, plus en détail et en référence aux figures 2 à 8, l'actionneur électromécanique 8 du dispositif d'entraînement motorisé 7 appartenant au dispositif d'occultation 1 de la figure 1.

L'actionneur électromécanique 8 comprend, entre autres, le moteur électrique 18 et l'unité de contrôle 19.

Ici, le moteur électrique 18 comprend un stator 182, un rotor 184 et un arbre de rotation 186. L'arbre de rotation 186 est solidaire du rotor 184. L'arbre de rotation 186 est configuré pour être entraîné en rotation, autrement dit est entraîné en rotation, autour d'un axe de rotation X. Ici, l'arbre de rotation 186 dépasse aux deux extrémités opposées de l'actionneur électromécanique 8 et constitue un arbre de sortie pour cet actionneur électromécanique 8.

En variante, non représentée, l'arbre de rotation 186 est limité axialement à la longueur du moteur électrique 18 et connecté à deux arbres de sortie de l'actionneur électromécanique 8 qui dépassent respectivement à chacune des extrémités de celui-ci, voire à un arbre de sortie qui ne dépasse qu'à une seule extrémité de celui-ci.

Ici, le stator 182 et le rotor 184 sont positionnés de manière coaxiale autour de l'axe de rotation X. En outre, l'arbre de rotation 186 est intégré ou accouplé au rotor 184.

L'axe de rotation X est également l'axe de rotation des enrouleurs, dans une configuration montée du dispositif d'entraînement motorisé 7.

L'actionneur électromécanique 8 permet de déplacer l'écran 2 du dispositif d'occultation 1, en particulier selon un mouvement vertical, ainsi que d'orienter les lames de l'écran 2.

L'actionneur électromécanique 8 comprend, en outre, un câble d'alimentation électrique 10.

L'actionneur électromécanique 8 est configuré pour être alimenté, autrement dit est alimenté, en énergie électrique par une source d'alimentation électrique principale 54, par l'intermédiaire du câble d'alimentation électrique 10.

Avantageusement, la source d'alimentation électrique principale 54 peut être un réseau d'alimentation électrique du secteur ou une batterie, pouvant être rechargée, par exemple, par un panneau photovoltaïque ou un chargeur, non représenté.

L'actionneur électromécanique 8 comprend, en outre, un carter 17, en particulier tubulaire.

Le moteur électrique 18 et l'unité de contrôle 19 sont logés, autrement dit montés, à l'intérieur du carter 17, en particulier dans une configuration assemblée de l'actionneur électromécanique 8.

Ici, le carter 17 de l'actionneur électromécanique 8 comprend une pluralité de tronçons, dont au moins trois tronçons désignés par les références 17A, 17B, 17C. Il est de forme parallélépipédique et, plus particulièrement, présente une section de forme globalement rectangulaire.

En variante, non représentée, le carter 17 de l'actionneur électromécanique 8 est de forme cylindrique à section circulaire.

Dans un mode de réalisation, le carter 17 est réalisé au moins en partie dans un matériau métallique.

La matière du carter de l'actionneur électromécanique n'est pas limitative et peut être différente. Il peut, en particulier, s'agir d'une matière plastique.

Avantageusement, l'actionneur électromécanique 8 comprend, en outre, au moins un réducteur 12.

Le réducteur 12 comprend au moins un étage de réduction. L'étage de réduction peut être un train d'engrenages de type épicycloïdal.

Le type et le nombre d'étages de réduction du réducteur ne sont pas limitatifs. Les étages de réduction peuvent être, par exemple, au nombre de deux ou trois.

Chaque extrémité de l'arbre de rotation 186 porte une douille 187 d'accouplement à un arbre d'entraînement 11 de l'un des enrouleurs.

Chaque enrouleur est ainsi entraîné en rotation, au niveau de l'un des basculateurs 13, par l'un des arbres d'entraînement 11 couplé avec l'arbre de rotation 186 de l'actionneur électromécanique 8.

Avantageusement, l'actionneur électromécanique 8 comprend, en outre, un frein 46, comme illustré à la figure 3.

A titre d'exemples nullement limitatifs, le frein 46 peut être un frein à ressort, un frein à came, un frein magnétique ou un frein électromagnétique.

Ici, le réducteur 12 et le frein 46 sont également logés dans le carter 17 de l'actionneur électromécanique 8.

En variante, non représentée, le réducteur 12 et le frein 46 sont disposés à l'extérieur du carter 17 de l'actionneur électromécanique 8.

Avantageusement, l'actionneur électromécanique 8 comprend, en outre, un dispositif de détection de fin de course 21.

L'écran 2 comprend la pluralité de lames 3, dont une première lame 3h. La première lame 3h fait face à la paroi de fond 9a du rail 9, en particulier dans la configuration assemblée du dispositif d'occultation 1. Autrement dit, la première lame 3h de l'écran 2 correspond à la lame 3 supérieure de l'écran 2.

Dans le cas d'un store à lames, une position haute, en particulier de sécurité, correspond à une mise en appui de la première lame 3h de l'écran 2 contre un élément du dispositif de détection de fin de course 21.

Le dispositif de détection de fin de course 21 permet, notamment, de déterminer l'atteinte de la position de fin de course haute de l'écran 2.

Le dispositif de détection de fin de course 21 est généralement appelé « champignon ».

Une position de fin de course haute, en particulier de fonctionnement, correspond à une position de fin de course haute prédéterminée, en particulier programmée au moyen de l'unité de contrôle 19 et déterminée au moyen d'un dispositif de comptage 35.

En outre, une position de fin de course basse correspond à une position de fin de course basse prédéterminée, en particulier programmée au moyen de l'unité de contrôle 19 et déterminée au moyen du dispositif de comptage 35, ou à la mise en appui de la barre de charge 4 contre un seuil de l'ouverture du bâtiment, ou encore au déploiement complet de l'écran 2.

Ici, le dispositif de comptage 35 peut être de type magnétique. Un tel dispositif de comptage 35 comprend au moins une roue, pouvant être assemblée sur l'arbre de rotation 186 du moteur électrique 18, et des capteurs à effet Hall, qui ne sont pas représentés en détail.

Par ailleurs, le type de dispositif de comptage 35 n'est pas limitatif et peut être différent, en particulier de type optique ou de type temporel et réalisé au travers du microcontrôleur 29 de l'unité de contrôle 19.

Avantageusement, le dispositif de détection de fin de course 21 comprend un organe 22, mobile à l'intérieur d'un boîtier 17D formé par une partie du carter 17, dans l'exemple monobloc avec la partie 17A du carter 17, et, éventuellement, un organe de rappel élastique 23 formé par un ressort hélicoïdal.

En variante, non représentée, le boîtier 17D du dispositif de détection de fin de course 21 peut être formé par une partie du carter 17 rapportée sur la partie 17A du carter 17 et fixée sur celle-ci, par exemple au moyen d'éléments de fixation par vissage ou par encliquetage élastique.

Ici, le boîtier 17D du dispositif de détection de fin de course 21 est cylindrique et présente une section intérieure de forme globalement circulaire.

En variante, non représentée, le boîtier 17D du dispositif de détection de fin de course 21 est de forme parallélépipédique.

En variante, non représentée, l'organe de rappel élastique 23 peut être différent d'un ressort hélicoïdal, par exemple un bloc de matériau élastiquement déformable.

L'organe 22 est mobile en translation selon un axe A22 radial à l'axe de rotation X. L'organe 22 est pourvu d'une tige rectiligne 22A qui est engagée dans un tube creux 17E, formé par une partie du carter 17 et qui est centré sur l'axe A22. Le mouvement de translation de l'organe 22 selon l'axe A22 est guidé par la coopération de formes des parties 17E et 22A.

L'organe 22 comprend une tête 22B en saillie du boîtier 17D et destinée à recevoir en appui la première lame 3h, lorsque l'écran 2 parvient dans sa position de fin de course haute. Pour ce faire, le boîtier 17D et l'organe 22 sont engagés par le dessus dans une lumière, non représentée, ménagée dans la paroi de fond 9a du rail 9. Lorsqu'il est repoussé par la première lame 3h le long de l'axe A22, l'organe 22 actionne un interrupteur 43 porté par la carte de circuit imprimé 42. Ceci permet à l'unité de contrôle 19 de détecter que l'écran 2 est en position de fin de course haute.

Avantageusement, l'actionneur électromécanique 8 comprend, en outre, un dispositif de commande de basculement 25.

Le dispositif de commande de basculement 25 est configuré pour basculer, autrement dit bascule, l'unité électronique de contrôle 19 entre un premier mode de fonctionnement et un deuxième mode de fonctionnement. Dans le premier mode de fonctionnement, dit de commande, normal ou d'usage, l'unité électronique de contrôle 19 alimente en énergie électrique le moteur électrique 18 en fonction des mouvements de montée ou de descente à effectuer par l'écran 2, ainsi que des mouvements d'orientation à effectuer par les lames 3 de l'écran 2. Dans le deuxième mode de fonctionnement, en particulier d'apprentissage, de configuration, de programmation ou de réglage, l'unité électronique de contrôle 19 met en oeuvre le dispositif de comptage 35 pour déterminer et mémoriser une ou plusieurs positions de fin de course de l'écran 2.

Le dispositif de commande de basculement 25 comprend un volet 26 monté pivotant, autour d'un axe A25, dans un boîtier 17F, formé par une partie du carter 17, dans l'exemple monobloc avec la partie 17A du carter 17.

Le carter 17 comprend au moins une paroi 17G.

Ici, la paroi 17G est une paroi d'extrémité du carter 17 assemblée, autrement dit configurée pour être assemblée, sur le carter 17, en l'occurrence sur le tronçon 17A du carter 17, en particulier dans la configuration assemblée de l'actionneur électromécanique 8.

En variante, non représentée, la paroi 17G est une paroi d'extrémité du carter 17 intégrée, autrement dit faisant partie intégrante de l'un des tronçons 17A, 17B, 17C du carter 17.

Le câble d'alimentation électrique 10 traverse, autrement dit est configuré pour traverser, la paroi 17G du carter 17, en particulier dans la configuration assemblée de l'actionneur électromécanique 8.

Le câble d'alimentation électrique 10 est connecté électriquement, autrement dit est configuré pour être connecté électriquement, à l'unité de contrôle 19, en particulier dans la configuration assemblée de l'actionneur électromécanique 8.

Avantageusement, la paroi 17G du carte 17 comprend un orifice 172 de passage de l'arbre de rotation 186. Cet orifice 172 est aligné sur l'axe de rotation X, dans la configuration assemblée de l'actionneur électromécanique 8.

On note X17 un axe longitudinal de la paroi 17G qui est défini comme l'axe central de l'orifice 172 et qui est confondu avec l'axe de rotation X, dans la configuration assemblée de l'actionneur électromécanique 8.

La paroi 17G du carter 17 présente un côté interne S1, orienté vers l'intérieur du carter 17, en particulier vers le moteur électrique 18 et l'unité de contrôle 19, et un côté externe S2, orienté vers l'extérieur du carter 17, le côté interne S1 étant opposé au côté externe S2.

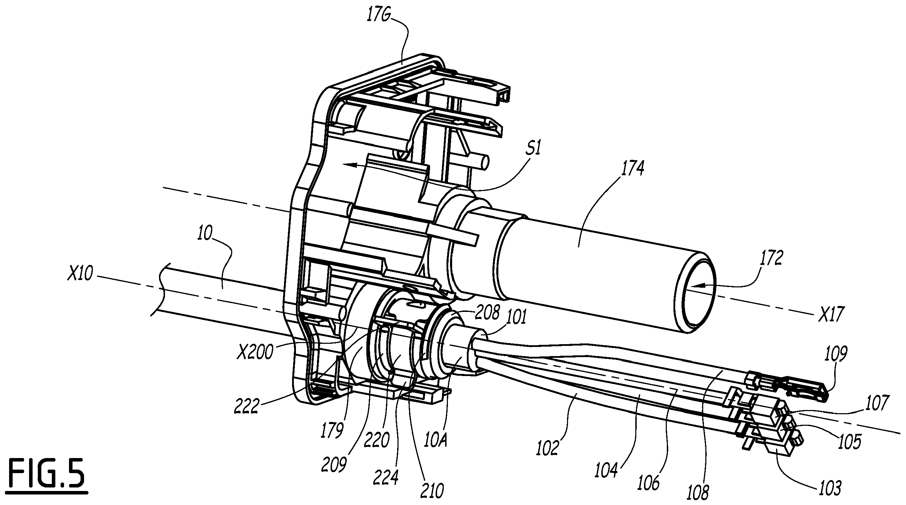

Avantageusement, la paroi 17G du carter 17 comprend un premier manchon 174. Le premier manchon 174 s'étend à l'intérieur du carter 17, à partir du côté interne S1 de la paroi 17G, comme illustré aux figures 5 à 8.

Ici, l'orifice 172 débouche par rapport à la paroi 17G du carter 17 sur le côté externe S2 et se prolonge jusqu'à l'intérieur du premier manchon 174.

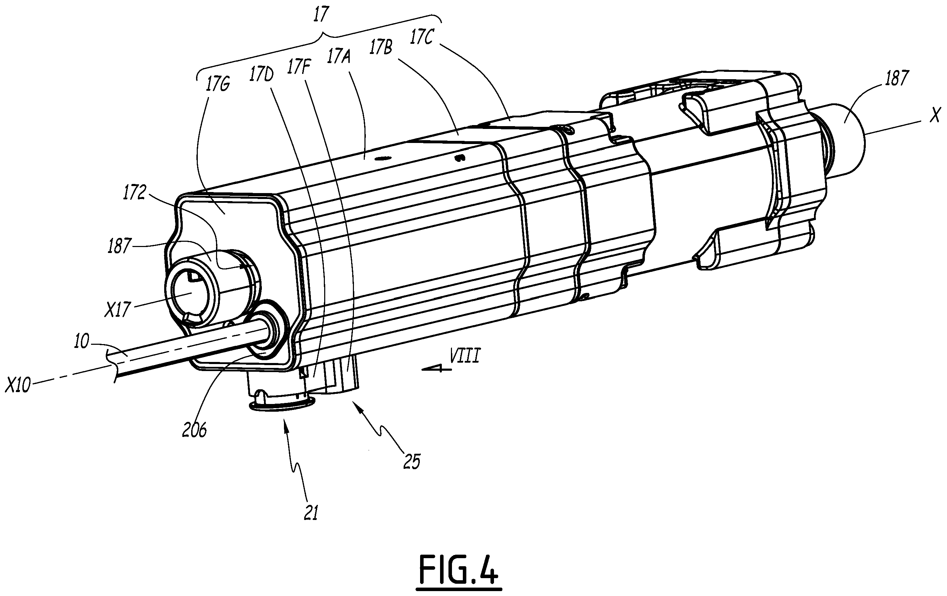

Dans la configuration assemblée de l'actionneur électromécanique 8, une douille 187 est montée sur l'arbre de rotation 186, sur le côté externe S2 de la paroi 17G du carter 17, comme visible à la figure 4.

La paroi 17G du carter 17 comprend, en outre, un logement 176. Le logement 176 débouche sur le côté externe S2 de la paroi 17G du carter 17. En outre, la section du logement 176, prise perpendiculairement à l'axe longitudinal X17, est non-circulaire.

Ici, la section, transversale à l'axe longitudinal X17, du logement 176 est rectangulaire avec des coins arrondis.

En variante, non représentée, la section du logement 176 peut être différente, par exemple ovale ou elliptique, tout en restant non-circulaire.

La paroi 17G du carter 17 comprend, en outre, une ouverture traversante 178. En outre, l'ouverture traversante 178 est ménagée dans la paroi 17G du carter 17, en particulier dans le prolongement du logement à section non-circulaire 176 ménagé dans la paroi 17G du carter 17, selon une direction parallèle à l'axe longitudinal X17.

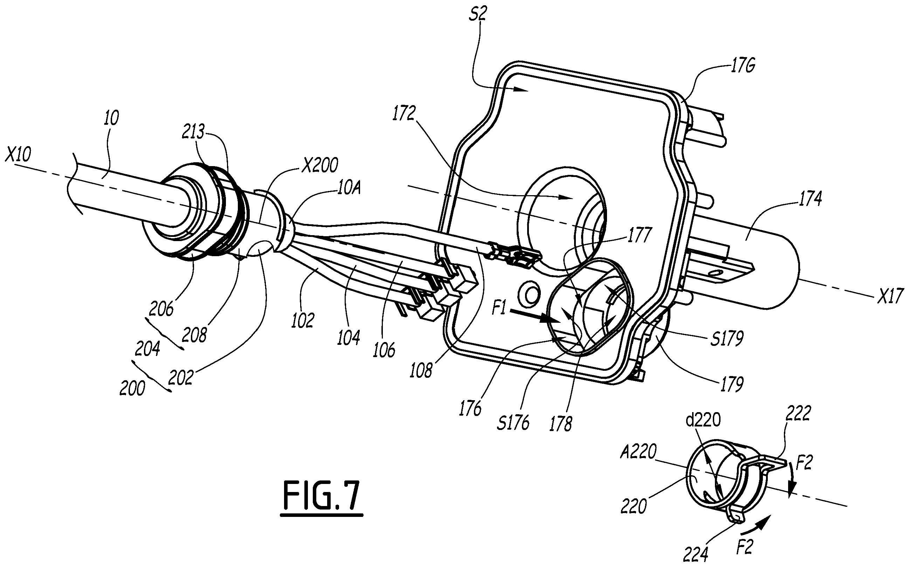

Avantageusement, la paroi 17G du carter 17 comprend, en outre, un premier épaulement 177, visible à la figure 7. En outre, le premier épaulement 177 forme une jonction entre le logement à section non-circulaire 176 et l'ouverture traversante 178 de la paroi 17G du carter 17.

Ici, l'ouverture traversante 178 est entourée par un deuxième manchon 179 de la paroi 17G du carter 17. Le deuxième manchon 179 s'étend en saillie à partir du côté interne S1 de la paroi 17G du carter 17, en particulier au-delà du premier épaulement 177.

Avantageusement, le logement à section non-circulaire 176 constitue une embouchure de l'ouverture traversante 178, à partir du côté externe S2 de la paroi 17G du carter 17.

On note 179A un bord du deuxième manchon 179 opposé au logement à section non-circulaire 176.

Le deuxième manchon 179 constitue un relief interne de la paroi 17G du carter 17.

On note S176 une surface du logement à section non-circulaire 176, qui délimite celui-ci, entre le premier épaulement 177 et le côté externe S2 de la paroi 17G du carter 17, et qui peut être appelée « surface interne ».

On note S179 une surface du deuxième manchon 179, qui délimite l'ouverture traversante 178, entre le premier épaulement 177 et le bord 179A, et qui peut être appelée « surface radiale interne ».

Ici, la surface S179 est cylindrique à base circulaire. L'ouverture traversante 178 est donc un cylindre à base circulaire.

Ici, le deuxième manchon 179 est pourvu, sur sa surface S179, de deux découpes 179B qui agrandissent son diamètre interne d179.

Le câble d'alimentation électrique 10 comprend des conducteurs électriques 102, 104, 106, 108 et, éventuellement, une gaine d'isolation électrique 101. En outre, la gaine d'isolation électrique 101 entoure les conducteurs électriques 102, 104, 106, 108 sur la majeure partie de la longueur du câble d'alimentation électrique 10.

On note 10A une extrémité 10A du câble d'alimentation électrique 10, à partir de laquelle les conducteurs électriques 102, 104, 106, 108 sont dégagés de la gaine d'isolation électrique 101.

Chacun des conducteurs électriques 102, 104, 106, 108 est équipé d'une cosse électrique 103, 105, 107, 109 de raccordement à l'unité de contrôle 19.

La partie de chacun des conducteurs électriques 102, 104, 106, 108 non protégée par la gaine d'isolation électrique 101 est disposée à l'intérieur du carter 17 et ne risque pas d'être blessée, voire sectionnée, par un élément extérieur au carter 17.

L'actionneur électromécanique 8 comprend, en outre, un embout 200. En outre, l'embout 200 est immobilisé sur le câble d'alimentation électrique 10, en particulier à proximité de son extrémité 10A.

Ainsi, le câble d'alimentation électrique 10 porte l'embout 200.

On note X10 un axe longitudinal du câble d'alimentation électrique 10 et X200 un axe longitudinal de l'embout 200. Les axes longitudinaux X10 et X200 sont confondus au voisinage de l'extrémité 10A du câble d'alimentation électrique 10.

Avantageusement, l'embout 200 comprend une armature 202, comme visible à la figure 7, en particulier formée par une bague, pouvant être, par exemple, métallique. En outre, l'armature 202 est serrée autour du câble d'alimentation électrique 10 et, plus particulièrement, autour de la gaine d'isolation électrique 101, de préférence au voisinage de l'extrémité 10A du câble d'alimentation électrique 10.

En variante, non représentée, l'armature 202 peut être formée par une pièce différente.

L'embout 200 comprend, en outre, une pièce 204. La pièce 204 de l'embout 200 est immobilisée sur le câble d'alimentation électrique 10.

A la figure 7, l'armature 202 est visible par un arrachement partiel de la pièce 204.

Ici, la pièce 204 de l'embout 200 est surmoulée autour du câble d'alimentation électrique 10 et, plus particulièrement, de l'armature 202 et de la gaine d'isolation électrique 101, en l'occurrence à proximité de l'extrémité 10A du câble d'alimentation électrique 10.

Ainsi, la pièce 204 de l'embout 200 est surmoulée à la fois autour de l'armature 202 et de la gaine d'isolation électrique 101, au point que l'armature 202 est protégée par la pièce 204 après surmoulage.

En variante, non représentée, l'embout 200 est dépourvu d'une armature 202. Dans ce cas, la pièce 204 est directement immobilisée, en particulier, surmoulée sur le câble d'alimentation électrique 10 et, plus particulièrement, sur la gaine d'isolation électrique 101.

En variante, la pièce 204 de l'embout 200 n'est pas surmoulée sur le câble d'alimentation électrique 10, mais elle est fixée sur celui-ci par une autre technique d'assemblage, notamment par collage ou soudage.

Avantageusement, le matériau constitutif de la pièce 204 de l'embout 200 est électriquement isolant. A titre d'exemple non limitatif, il peut s'agir d'une matière plastique.

L'embout 200 comprend, en outre, une partie à section non-circulaire 206, en particulier en section transversale à l'axe longitudinal X200. En outre, la partie à section non-circulaire 206 de l'embout 200 est engagée dans le logement à section non-circulaire 176 ménagé dans la paroi 17G du carter 17.

L'embout 200 comprend, en outre, un fût 208. En outre, le fût 208 est engagé dans l'ouverture traversante 178 de la paroi 17G du carter 17.

Le fût 208, que l'on pourrait également qualifier de « canon » ou de « barreau » est une partie allongée de l'embout 200 qui s'étend principalement selon l'axe longitudinal X200.

Comme illustré à la figure 5, une partie 209 du fût 208 dépasse de l'ouverture traversante 178 sur le côté interne S1 de la paroi 17G du carter 17, en particulier dans la configuration assemblée de l'actionneur électromécanique 8.

Avantageusement, la pièce 204 constitue au moins la partie à section non-circulaire 206 de l'embout 200 et le fût 208 de l'embout 200.

Avantageusement, la partie à section non-circulaire 206 de l'embout 200 est un talon.

La partie à section non-circulaire 206 de l'embout 200 est configurée pour être reçue, autrement dit est reçue, dans le logement à section non-circulaire 176, en particulier dans la configuration assemblée de l'actionneur électromécanique 8. En outre, le fût 208 de l'embout 200 est configuré pour s'étendre, autrement dit s'étend, au travers de l'ouverture traversante 178, en particulier dans la configuration assemblée de l'actionneur électromécanique 8.

Ici, le fût 208 est plus proche de l'extrémité 10A du câble d'alimentation électrique 10 que la partie à section non-circulaire 206 de l'embout 200.

Avantageusement, la section transversale à l'axe X200 de la partie à section non-circulaire 206 de l'embout 200 est complémentaire de la section du logement à section non-circulaire 176, transversale à l'axe longitudinal X17.

Ainsi, lorsque la partie à section non-circulaire 206 de l'embout 200 est reçue dans le logement à section non-circulaire 176, dans la configuration assemblée de l'actionneur électromécanique 8 visible aux figures 4 et 5, l'embout 200 est immobilisé en rotation, autour des axes longitudinaux X10, X200, vis-à-vis de la paroi 17G du carter 17, par coopération de formes entre la partie à section non-circulaire 206 et le logement à section non-circulaire 176.

Ici, la section transversale à l'axe longitudinal X200 de la partie à section non-circulaire 206 de l'embout 200 est rectangulaire avec des coins arrondis, comme celle du logement à section non-circulaire 176 ménagé dans la paroi 17G du carter 17.

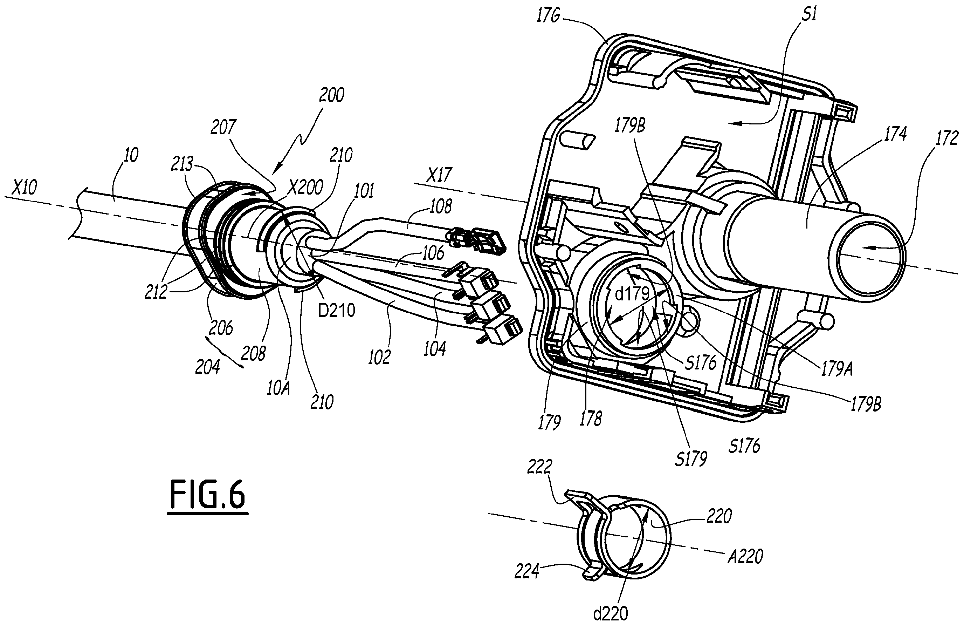

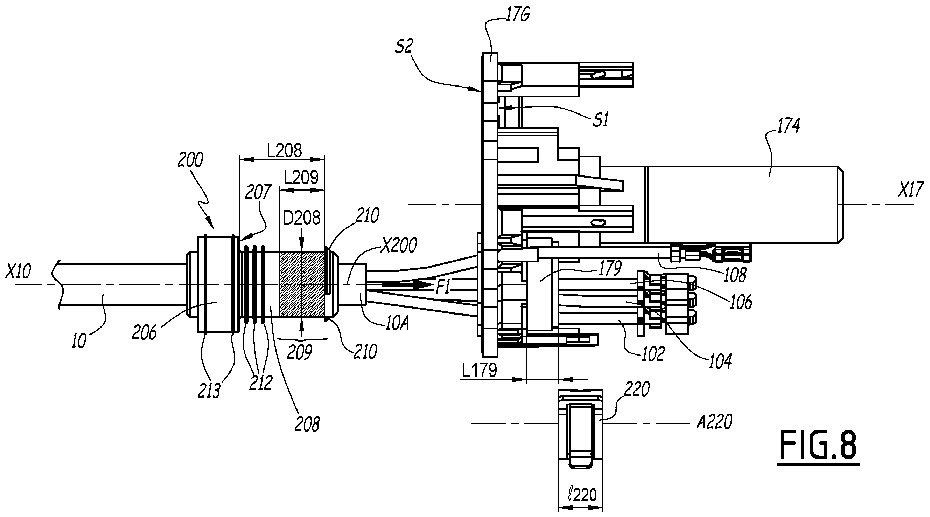

En pratique, lors de l'assemblage de l'actionneur électromécanique 8, les conducteurs électriques 102, 104, 106, 108 sont insérés dans le logement à section non-circulaire 176 ménagé dans la paroi 17G du carter 17 et à travers l'ouverture traversante 178 ménagée dans la paroi 17G du carter 17, à partir du côté externe S2 de la paroi 17G, dans le sens de la flèche F1 aux figures 7 et 8, ce qui les fait passer de la configuration des figures 6 et 7 à la configuration de la figure 8, puis à la configuration des figures 4 et 5, où le fût 208 dépasse de l'ouverture traversante 178, au-delà du bord 179A du deuxième manchon 179.

Avantageusement, l'embout 200 comprend, en outre, un deuxième épaulement 207. En outre, le deuxième épaulement 207 est ménagé à une interface entre la partie à section non-circulaire 206 et le fût 208 de l'embout 200.

Le mouvement d'enfoncement de l'embout 200 du câble d'alimentation électrique 10 dans le logement à section non-circulaire 176 et dans l'ouverture traversante 178 est limité par un appui du deuxième épaulement 207 de l'embout 200 contre le premier épaulement 177 de la paroi 17G du carter 17.

On note L179 la longueur du deuxième manchon 179 de la paroi 17G du carter 17, mesurée parallèlement à l'axe longitudinal X17. La longueur L179 est égale à la longueur de l'ouverture traversante 178 ménagée dans la paroi 17G du carter 17, mesurée parallèlement à l'axe longitudinal X17.

La section du fût 208 de l'embout 200, en particulier au niveau de la partie 209 du fût 208, prise perpendiculairement à l'axe longitudinal X200, est circulaire.

On note D208 le diamètre du fût 208 de l'embout 200, sur la plus grande partie de sa longueur, en particulier au niveau de la partie 209 du fût 208. Le diamètre D208 du fût 208 de l'embout 200 est choisi inférieur ou égal au diamètre interne d179 du deuxième manchon 179 de la paroi 17G du carter 17, pour permettre le passage du fût 208 à travers l'ouverture traversante 178.

Avantageusement, le fût 208 comprend, sur la partie 209 du fût 208 dépassant de l'ouverture traversante 178 sur le côté interne S1 de la paroi 17G du carter 17, une ou plusieurs portions de collerette 210, pouvant être, par exemple, au nombre de deux, comme illustré à la figure 6.

Autrement dit, la ou les portions de collerette 210 sont ménagées sur le fût 208 à une extrémité de l'embout 200 opposée à la partie à section non-circulaire 206 de l'embout 200.

Avantageusement, la ou chacune des portions de collerette 210 s'étend sur une partie de la circonférence du fût 208 et augmente localement son diamètre extérieur. En outre, la ou chaque portion de collerette 210 est ménagée sur le fût 208 de sorte à traverser la ou l'une des découpes 179B du deuxième manchon 179, lorsque le fût 208 est introduit à travers l'ouverture traversante 178 ménagée dans la paroi 17G du carter 17, comme expliqué ci-après.

Ainsi, lorsque l'embout 200 est assemblé sur la paroi 17G du carter 17, la ou les portions de collerette 210 sont disposées à l'intérieur du carter 17, à distance du bord 179A du deuxième manchon 179.

Le nombre et la répartition des portions de collerette n'est pas limitatif. Ils peuvent être différents, par exemple, au nombre de une, de trois ou plus, avec une répartition adaptée avec une géométrie du bord du deuxième manchon.

On note L208 la longueur du fût 208, mesurée parallèlement à l'axe longitudinal X200, entre le deuxième épaulement 207 et la ou les portions de collerette 210.

La longueur L208 est strictement supérieure à la longueur L179, au point que la partie 209 du fût 208 dépasse au-delà du bord 179A du deuxième manchon 179, autrement dit de l'ouverture traversante 178, du côté interne S1 de la paroi 17G du carter 17, lorsque les premier et deuxième épaulements 177, 207 sont en appui l'un contre l'autre. Pour faciliter son repérage, la partie 209 du fût 208 est grisée à la figure 8.

On note L209 la longueur de la partie 209 du fût 208, mesurée parallèlement à l'axe longitudinal X200.

Ici, la longueur L209 est égale à la différence des longueurs L208 et L179. On a ainsi la relation suivante :

$$L209 = L208 - L179 \qquad\qquad \text{(Equation 1)}$$

L'actionneur électromécanique 8 comprend, en outre, un organe de retenue 220. En outre, l'organe de retenue 220 est monté, autrement dit est configuré pour être monté, sur la partie 209 du fût 208, en particulier dans la configuration assemblée de l'actionneur électromécanique 8.

Ici, l'organe de retenue 220 est installé autour de la partie 209 du fût 208, entre le bord 179A du deuxième manchon 179 de la paroi 17G du carter 17 et la ou les portions de collerette 210 du fût 208.

Ainsi, le fût 208 forme une zone de réception de l'organe de retenue 220, autrement dit configurée pour recevoir l'organe de retenue 220, en l'occurrence la surface périphérique externe de la partie 209 du fût 208, en dehors de la ou des portions de collerette 210, et cette zone de réception est de diamètre D208.

Ainsi, l'organe de retenue 220 retient axialement l'embout 200 par rapport à la paroi 17G du carter 17, dans sa position où le deuxième épaulement 207 est plaqué contre le premier épaulement 177, avec la partie à section non-circulaire 206 de l'embout 200 en place dans le logement à section non-circulaire 176.

En variante, non représentée, l'organe de retenue 220 peut être installé entre la ou les portions de collerette 210 du fût 208 et un autre relief interne de la paroi 17G du carter 17 différent du bord 179A du deuxième manchon 179.

Avantageusement, l'organe de retenue 220 est une bague, pouvant être, par exemple, en métal, tel qu'un acier à ressort.

Avantageusement, la bague formant l'organe de retenue 220 est élastiquement déformable, entre une première configuration, dite « de repos » ou « initiale », où son diamètre interne d220 est inférieur ou égal au diamètre D208 du fût 208, sur la zone formée par le fût 208 pour la réception de l'organe de retenue 220, et une deuxième configuration, dite « d'assemblage », où son diamètre interne d220 est strictement supérieur à un diamètre maximum D210 du fût 208.

Avantageusement, l'organe de retenue 220 comprend des languettes 222, 224, au nombre de deux. En outre, les languettes 222, 224 permettent d'exercer un effort de pincement, représenté par les flèches F2 à la figure 7, de sorte à déformer élastiquement l'organe de retenue 220, pour augmenter temporairement son diamètre intérieur d220.

Ainsi, l'effort de pincement exercé sur les languettes 222, 224 permet d'engager l'organe de retenue 220 sur la partie 209 du fût 208, dépassant du deuxième manchon 179 de la paroi 17G du carter 17 vers l'intérieur du carter 17.

De cette manière, en exerçant l'effort de pincement, représenté par les flèches F2, au moyen des languettes 222, 224, l'organe de retenue 220 passe de sa première configuration, où son diamètre interne d220 est inférieur ou égal au diamètre D208 du fût 208, à sa deuxième configuration, où son diamètre interne d220 est supérieur ou égal au diamètre externe D210 de la ou des portions de collerette 210, qui constitue un diamètre maximum du fût 208.

En outre, lorsque l'effort de pincement, sur les languettes 222, 224, est relâché, l'organe de retenue 220 revient dans sa première configuration, par retour élastique.

La géométrie de l'organe de retenue 220 est déterminé de telle sorte que son diamètre intérieur d220 non contraint, c'est-à-dire en l'absence d'effort de pincement sur les languettes 222, 224, est inférieur ou égal au diamètre D208 du fût 208. De cette manière, une immobilisation de l'embout 200 par rapport à la paroi 17G du carter 17, selon la direction de l'axe longitudinal X200, est garantie par serrage élastique de l'organe de retenue 220 sur le fût 208 et, plus particulièrement, sur la partie 209 du fût 208.

On note t220 la largeur de l'organe de retenue 220, mesurée parallèlement à un axe central A220 de l'organe de retenue 220.

L'axe central A220 de l'organe de retenue 220 est confondu avec l'axe longitudinal X200 de l'embout 200, dans une configuration assemblée de l'organe de retenue 220 sur le fût 208.

La largeur e220 de l'organe de retenue 220 est égale ou inférieure, par exemple, à moins de 5% près, par rapport à la longueur L209 de la partie 209 du fût 208.

Ainsi, lorsque l'organe de retenue 220 est monté autour de la partie 209 du fût 208, l'organe de sortie 220 recouvre l'essentiel de cette partie 209 du fût 208, de sorte à éviter un mouvement d'arrachement de l'embout 200 par rapport à la paroi 17G du carter 17 ou à limiter une amplitude d'un tel mouvement.

Si la largeur e220 de l'organe de retenue 220 est égale à la longueur L209 de la partie 209 du fût 208, alors aucun débattement axial de l'embout 200 dans le logement à section non-circulaire 176 et dans l'ouverture traversante 178 de la paroi 17G du carter 17 n'est possible.

Si la largeur e220 de l'organe de retenue 220 est strictement inférieure à la longueur L209 de la partie 209 du fût 208, alors un débattement axial est possible, sur une course égale à la différence entre ces dimensions.

Le fût 208 porte au moins une première lèvre d'étanchéité 212. En outre, la ou chaque première lèvre d'étanchéité 212 est en contact avec la surface S179, délimitant l'ouverture traversante 178 ménagée dans la paroi 17G du carter 17.

Ici, le fût 208 comprend une pluralité de premières lèvres d'étanchéité 212, en particulier au nombre de trois. Les premières lèvres d'étanchéité 212 sont décalées axialement le long de l'axe longitudinal X200 de l'embout 200. Les premières lèvres d'étanchéité 212 entourent le fût 208 sur toute sa circonférence. Les premières lèvres d'étanchéité 212 sont situées à proximité de la partie à section non-circulaire 206 de l'embout 200, c'est-à-dire du côté du fût 208 opposé au côté du fût 208 présentant la ou les portions de collerette 210. En outre, les premières lèvres d'étanchéité 212 sont ménagées sur une portion du fût 208 distincte de la partie 209 du fût 208 dépassant de l'ouverture traversante 178 sur le côté interne S1 de la paroi 17G du carter 17.

Le nombre de premières lèvres d'étanchéité n'est pas limitatif. Il peut être différent de trois, par exemple égal à un ou deux, voire supérieur ou égal à quatre.

La partie à section non-circulaire 206 de l'embout 200 et la partie 209 du fût 208 sont disposées, le long de l'axe longitudinal X200, de part et d'autre de la ou des premières lèvres d'étanchéité 212. En d'autres termes, la partie à section non-circulaire 206 de l'embout 200 est opposée, par rapport aux premières lèvres d'étanchéité 212, à la partie 209 du fût 208.

Ici, le diamètre D208 est le diamètre du fût 208 entre les portions de collerette 210 et les premières lèvres d'étanchéité 212.

La ou chaque première lèvre d'étanchéité 212 est configurée pour être en contact, autrement dit est en contact, avec la surface S179 du deuxième manchon 179 de la paroi 17G du carter 17, en particulier dans une configuration assemblée de l'embout 200 avec la paroi 17G du carter 17, de sorte à garantir une étanchéité entre l'embout 200 du câble d'alimentation électrique 10 et la paroi 17G du carter 17, à l'intérieur de l'ouverture traversante 178 ménagée dans la paroi 17G du carter 17.

De cette manière, la ou chaque première lèvre d'étanchéité 212 permet d'éviter qu'un liquide ne s'écoule ou que de la poussière ne s'infiltre à partir de l'extérieur du carter 17 vers l'intérieur du carter 17.

Avantageusement, la ou chaque première lèvre d'étanchéité 212 est monobloc avec la pièce 204 de l'embout 200.

En variante, la ou chaque lèvre première d'étanchéité 212 peut être formée par un segment rapporté autour du fût 208.

Avantageusement, la partie à section non-circulaire 206 de l'embout 200 porte au moins une deuxième lèvre d'étanchéité 213. En outre, dans la configuration assemblée de l'embout 200 avec la paroi 17G du carter 17, la ou chaque deuxième lèvre d'étanchéité 213 est en contact avec la surface S176, délimitant le logement à section non-circulaire 176 ménagé dans la paroi 17G du carter 17.

Ici, la partie à section non-circulaire 206 de l'embout 200 comprend deux deuxièmes lèvres d'étanchéité 213. En outre, les deuxièmes lèvres d'étanchéité 213 entourent la partie à section non-circulaire 206 de l'embout 200 sur toute sa circonférence.

Le nombre de deuxièmes lèvres d'étanchéité n'est pas limitatif. Il peut être différent de deux, par exemple égal à un ou supérieur ou égal à trois.

La ou chaque deuxième lèvre d'étanchéité 213 est configurée pour être en contact, autrement dit est en contact, avec la surface S176 du logement à section non-circulaire 176 ménagé dans la paroi 17G du carter 17, en particulier dans la configuration assemblée de l'embout 200 avec la paroi 17G du carter 17, de sorte à garantir une étanchéité entre l'embout 200 du câble d'alimentation électrique 10 et la paroi 17G du carter 17, à l'intérieur du logement à section non-circulaire 176 ménagé dans la paroi 17G du carter 17.

De cette manière, la ou chaque deuxième lèvre d'étanchéité 213 permet d'éviter qu'un liquide ne s'écoule ou que de la poussière ne s'infiltre à partir de l'extérieur du carter 17 vers l'intérieur du carter 17.

Avantageusement, la ou chaque deuxième lèvre d'étanchéité 213 est monobloc avec la pièce 204 de l'embout 200.

En variante, la ou chaque lèvre deuxième d'étanchéité 213 peut être formée par un segment rapporté autour de la partie à section non-circulaire 206.

On décrit à présent un mode d'exécution un procédé d'assemblage de l'actionneur électromécanique 8, illustré aux figures 2 à 8, conforme à l'invention, et, plus particulièrement, une partie relative au montage du câble d'alimentation électrique 10 avec la paroi 17G du carter 17.

Le procédé d'assemblage comprend une première étape d'insertion des conducteurs électriques 102, 104, 106, 108 du câble d'alimentation électrique 10 dans l'ouverture traversante 178 ménagée dans la paroi 17G du carter 17, en particulier à travers le logement à section non-circulaire 176 ménagé dans la paroi 17G du carter 17, en partant du côté externe S2 de la paroi 17G du carter 17 vers l'intérieur du carter 17, dans le sens de la flèche F1 aux figures 7 et 8.

Cette étape d'insertion est mise en oeuvre jusqu'à ce que la partie à section non-circulaire 206 de l'embout 200 du câble d'alimentation électrique 10 soit reçue dans le logement à section non-circulaire 176 ménagé dans la paroi 17G du carter 17 et que la ou chaque première lèvre d'étanchéité 212 soit en contact avec la surface S179, délimitant l'ouverture traversante 178 ménagée dans la paroi 17G du carter 17.

De cette manière, en poussant la partie à section non-circulaire 206 de l'embout 200 jusqu'au fond du logement à section non-circulaire 176 ménagé dans la paroi 17G du carter 17, c'est-à-dire en amenant le deuxième épaulement 207 de l'embout 200 en appui contre le premier épaulement 177 de la paroi 17G du carter 17, une configuration, non représentée, est atteinte où la partie 209 du fût 208 dépasse du deuxième manchon 179 de la paroi 17G du carter 17, du côté interne S1 de la paroi 17G, en étant exposée.

Suite à la première étape d'insertion, le procédé d'assemblage comprend une deuxième étape de montage de l'organe de retenue 220 sur la partie 209 du fût 208 dépassant de l'ouverture traversante 178 sur le côté interne S1 de la paroi 17G du carter 17, en verrouillant axialement l'embout 200 par rapport à la paroi 17G du carter 17, dans la position atteinte au terme de la première étape d'insertion.

Ainsi, l'organe de retenue 220 est mis en place autour de la partie 209 du fût 208. En outre, l'organe de retenue 220 verrouille axialement, le long des axes longitudinaux X10, X17, X200, l'embout 200 dans la position atteinte au terme de la première étape d'insertion, où l'embout 200 s'étend à travers la paroi 17G du carter 17, par l'intermédiaire du logement à section non-circulaire 176 et de l'ouverture traversante 178.

De cette manière, l'organe de retenue 220 est maintenu en appui contre le bord 179A du deuxième manchon 179 de la paroi 17G du carter 17 et contre la ou les portions de collerette 210 du fût 208, dans une position où la partie à section non-circulaire 206 de l'embout 200 est reçue dans le logement à section non-circulaire 176 ménagé dans la paroi 17G du carter 17, en étant bloquée en rotation autour des axes longitudinaux X10, X200.

Par conséquent, cet assemblage permet d'éviter des risques de torsion du câble d'alimentation électrique 10, alors que la ou chaque première lèvre d'étanchéité 212 est en contact avec la surface S179 de l'ouverture traversante 178, de sorte à améliorer l'étanchéité de l'assemblage ainsi réalisé.

Grâce à l'invention, l'assemblage du câble d'alimentation électrique sur la paroi du carter est simple et rapide, alors que l'embout du câble d'alimentation électrique assure une triple fonction d'anti-arrachement du câble d'alimentation électrique, d'anti-rotation et d'étanchéité, vis-à-vis de la paroi du carter. L'embout du câble d'alimentation électrique permet de fiabiliser la liaison mécanique entre le câble d'alimentation électrique et le carter, tout en évitant des risques liés à un défaut d'étanchéité, notamment de fuite de liquide ou ou de passage de poussière, vers l'intérieur du carter.

De cette manière, le fonctionnement de l'actionneur électromécanique est fiabilisé et celui-ci peut satisfaire à un indice de protection donné, notamment un indice de protection selon la norme EN 60335.

De nombreuses modifications peuvent être apportées aux exemples de réalisation décrits précédemment sans sortir du cadre de l'invention défini par les revendications.

Dans un autre exemple de réalisation, non représenté, le dispositif d'entraînement motorisé 7 comprend, outre une pluralité de premiers enrouleurs des cordons d'entraînement 5, une pluralité de deuxièmes enrouleurs des cordons d'orientation 6. Dans ce cas, les cordons d'entraînement 5 sont reliés, d'une part, à la barre de charge 4 et, d'autre part, aux premiers enrouleurs. Les cordons d'orientation 6 sont reliés, d'une part, à la barre de charge 4 et aux lames 3 et, d'autre part, aux deuxièmes enrouleurs. En pratique, l'extrémité inférieure de chaque cordon d'entraînement 5 est reliée à la barre de charge 4 et l'extrémité supérieure de chaque cordon d'entraînement 5 est reliée à l'un des premiers enrouleurs, en particulier dans la configuration assemblée du dispositif d'occultation 1 dans l'installation 100. L'extrémité inférieure de chaque cordon d'orientation 6 est reliée à la barre de charge 4 et l'extrémité supérieure de chaque cordon d'orientation 6 est reliée à l'un des deuxièmes enrouleurs, en particulier dans la configuration assemblée du dispositif d'occultation 1 dans l'installation 100. Préférentiellement, les premiers et deuxièmes enrouleurs sont disposés à l'intérieur du rail 9.

Dans un autre exemple de réalisation, non représenté, le dispositif d'entraînement motorisé 7 comprend deux chaînes d'entraînement et d'orientation des lames 3 de l'écran 2, en remplacement des cordons d'entraînement 5 et des cordons d'orientation 6. Dans un tel cas, chaque chaîne est disposée à l'intérieur de l'une des coulisses, disposée le long d'un côté de l'écran 2 du dispositif d'occultation 1.

En variante, le deuxième module de communication 49 de l'unité de contrôle 19 est configuré pour recevoir, autrement dit reçoit, et, éventuellement, pour émettre, autrement dit émet, des ordres de commande transmis par des moyens sans fil, en particulier, des ordres de commande radioélectriques. En outre, le premier module de communication 48 de l'unité de commande locale 14 ou centrale 15 est configuré pour émettre, autrement dit émet, et, éventuellement, pour recevoir, autrement dit reçoit, des ordres de commande, en particulier par des moyens sans fil, par exemple radioélectriques.

En outre, les modes de réalisation et variantes envisagés peuvent être combinés pour générer de nouveaux modes de réalisation de l'invention, sans sortir du cadre de l'invention défini par les revendications.

**Revendications**

**1.** Actionneur électromécanique (8) pour un dispositif d'occultation (1),

l'actionneur électromécanique (8) comprenant au moins :

- un moteur électrique (18),
- une unité de contrôle (19), l'unité de contrôle (19) étant configurée pour commander le moteur électrique (18),
- un carter (17), le moteur électrique (18) et l'unité de contrôle (19) étant logés à l'intérieur du carter (17),
- un câble d'alimentation électrique (10), le câble d'alimentation électrique (10) traversant une paroi (17G) du carter (17) et étant connecté électriquement à l'unité de contrôle (19), la paroi (17G) du carter (17) présentant un côté interne (S1), orienté vers l'intérieur du carter (17), et un côté externe (S2), orienté vers l'extérieur du carter (17), le côté interne (S1) étant opposé au côté externe (S2), et
- un organe de retenue (220),

**caractérisé**
**en ce que** l'actionneur électromécanique (8) comprend, en outre :

- un embout (200), l'embout (200) étant immobilisé sur le câble d'alimentation électrique (10),

**en ce que** le carter (17) comprend au moins :

- un logement à section non-circulaire (176), le logement à section non-circulaire (176) étant ménagé dans la paroi (17G) du carter (17), et
- une ouverture traversante (178), l'ouverture traversante (178) étant ménagée dans la paroi (17G) du carter (17),

**en ce que** l'embout (200) comprend au moins :

- une partie à section non-circulaire (206), la partie à section non-circulaire (206) de l'embout (200) étant engagée dans le logement à section non-circulaire (176) ménagé dans la paroi (17G) du carter (17), et
- un fût (208), le fût (208) étant engagé dans l'ouverture traversante (178) de la paroi (17G) du carter (17), une partie (209) du fût (208) dépassant de l'ouverture traversante (178) sur le côté interne (S1) de la paroi (17G) du carter (17), l'organe de retenue (220) étant monté sur la partie (209) du fût (208),

et **en ce que** le fût (208) porte au moins une lèvre d'étanchéité (212), la ou chaque lèvre d'étanchéité (212) étant en contact avec une surface (S179), délimitant l'ouverture traversante (178) ménagée dans la paroi (17G) du carter (17).

2. Actionneur électromécanique (8) pour un dispositif d'occultation (1) selon la revendication 1, **caractérisé en ce que** l'embout (200) comprend, en outre, une armature (202), l'armature (202) étant serrée autour du câble d'alimentation électrique (10).

3. Actionneur électromécanique (8) pour un dispositif d'occultation (1) selon la revendication 1 ou selon la revendication 2, **caractérisé en ce que** l'embout (200) comprend, en outre, une pièce (204), la pièce (204) constituant au moins la partie à section non-circulaire (206) de l'embout (200) et le fût (208) de l'embout (200), la pièce (204) étant immobilisée sur le câble d'alimentation électrique (10).

4. Actionneur électromécanique (8) pour un dispositif d'occultation (1) selon l'une quelconque des revendications 1 à 3, **caractérisé en ce que** le logement à section non-circulaire (176) ménagé dans la paroi (17G) du carter (17) constitue une embouchure de l'ouverture traversante (178) ménagée dans la paroi (17G) du carter (17), à partir du côté externe (S2) de la paroi (17G) du carter (17).

5. Actionneur électromécanique (8) pour un dispositif d'occultation (1) selon la revendication 4, **caractérisé**

**en ce que** la partie à section non-circulaire (206) de l'embout (200) est un talon,
et **en ce que** la ou les lèvres d'étanchéité (212) sont ménagées sur une portion du fût (208) distincte de la partie (209) du fût (208) dépassant de l'ouverture traversante (178) sur le côté interne (S1) de la paroi (17G) du carter (17).

6. Actionneur électromécanique (8) pour un dispositif d'occultation (1) selon la revendication 5, **caractérisé en ce que** la ou chaque lèvre d'étanchéité (212) est ménagée sur le fût (208), à proximité de la partie à section non-circulaire (206) de l'embout (200).

7. Actionneur électromécanique (8) pour un dispositif d'occultation (1) selon l'une quelconque des revendications 1 à 6, **caractérisé**

**en ce que** le fût (208) comprend, sur la partie (209) du fût (208) dépassant de l'ouverture traversante (178) sur le côté interne (S1) de la paroi (17G) du carter (17), au moins une portion de collerette (210),

et **en ce que** l'organe de retenue (220) est intercalé entre la ou chaque portion de collerette (210) du fût (208) et un relief (179A) de la paroi (17G) du carter (17), lorsque l'embout (200) est assemblé avec la paroi (17G) du carter (17).

8. Actionneur électromécanique (8) pour un dispositif d'occultation (1) selon l'une quelconque des revendications 1 à 7, **caractérisé en ce que** l'organe de retenue (220) est une bague élastiquement déformable, entre une première configuration, où son diamètre interne (d220) est inférieur ou égal à un diamètre (D208) du fût (208), sur une zone formée par le fût (208) pour la réception de l'organe de retenue (220), et une deuxième configuration, où son diamètre interne (d220) est strictement supérieur à un diamètre maximum (D210) du fût (208).

9. Dispositif d'occultation (1), le dispositif d'occultation (1) comprenant au moins :

   - un rail (9),
   - un écran (2), et
   - un actionneur électromécanique (8) conforme à l'une quelconque des revendications 1 à 8, l'actionneur électromécanique (8) étant disposé à l'intérieur du rail (9), l'écran (2) étant entraîné en déplacement par l'actionneur électromécanique (8).

10. Procédé d'assemblage d'un actionneur électromécanique (8) pour un dispositif d'occultation (1) selon l'une quelconque des revendications 1 à 8, **caractérisé en ce que** le procédé comprend au moins les étapes suivantes :

    - insérer des conducteurs électriques (102, 104, 106, 108) du câble d'alimentation électrique (10) dans l'ouverture traversante (178) ménagée dans la paroi (17G) du carter (17), jusqu'à ce que la partie à section non-circulaire (206) de l'embout (200) du câble d'alimentation électrique (10) soit reçue dans le logement à section non-circulaire (176) ménagé dans la paroi (17G) du carter (17) et que la ou chaque lèvre d'étanchéité (212) soit en contact avec la surface (S179), délimitant l'ouverture traversante (178) ménagée dans la paroi (17G) du carter (17), et
    - monter l'organe de retenue (220) sur la partie (209) du fût (208) dépassant de l'ouverture traversante (178) sur le côté interne (S1) de la paroi (17G) du carter (17), en verrouillant axialement l'embout (200) par rapport à la paroi (17G) du carter (17), dans la position atteinte au terme de l'étape d'insertion.


**Patentansprüche**

1. Elektromechanischer Aktuator (8) für eine Verdunkelungsvorrichtung (1),

   der elektromechanische Aktuator (8) mindestens umfassend:

   - einen Elektromotor (18),
   - eine Steuereinheit (19), wobei die Steuereinheit (19) konfiguriert ist, um den Elektromotor (18) zu steuern,
   - ein Gehäuse (17), wobei der Elektromotor (18) und die Steuereinheit (19) im Inneren des Gehäuses (17) untergebracht sind,
   - ein Stromversorgungskabel (10), wobei das Stromversorgungskabel (10) eine Wand (17G) des Gehäuses (17) durchquert und elektrisch mit der Steuereinheit (19) verbunden ist, wobei die Wand (17G) des Gehäuses (17) eine Innenseite (S1), die zum Inneren des Gehäuses (17) gerichtet ist, und eine Außenseite (S2), die zum Äußeren des Gehäuses (17) gerichtet ist, aufweist, wobei die Innenseite (S1) gegenüber der Außenseite (S2) ist, und
   - ein Halteelement (220),

   **dadurch gekennzeichnet,**
   **dass** der elektromechanische Aktuator (8) ferner Folgendes umfasst:

   - ein Endstück (200), wobei das Endstück (200) an dem Stromversorgungskabel (10) fixiert ist,

   **dass** das Gehäuse (17) mindestens Folgendes umfasst:

   - ein Gehäuse (176) mit nicht kreisförmigem Querschnitt, wobei das Gehäuse (176) mit nicht kreisförmigem Querschnitt in der Wand (17G) des Gehäuses (17) ausgebildet ist, und

- eine Durchgangsöffnung (178), wobei die Durchgangsöffnung (178) in der Wand (17G) des Gehäuses (17) ausgebildet ist,

**dass** das Endstück (200) mindestens Folgendes umfasst:

- einen Teil (206) mit nicht kreisförmigem Querschnitt, wobei der Teil (206) mit nicht kreisförmigem Querschnitt der Spitze (200) in die Aufnahme (176) mit nicht kreisförmigem Querschnitt eingreift, die in der Wand (17G) des Gehäuses (17) ausgebildet ist, und
- einen Schaft (208), wobei der Schaft (208) in die Durchgangsöffnung (178) der Wand (17G) des Gehäuses (17) eingreift, wobei ein Teil (209) des Schafts (208) aus der Durchgangsöffnung (178) auf der Innenseite (S1) der Wand (17G) des Gehäuses (17) hervorsteht, wobei das Halteelement (220) an dem Abschnitt (209) des Schafts (208) montiert ist,

und dadurch, dass der Schaft (208) mindestens eine Dichtlippe (212) trägt, wobei die oder jede Dichtlippe (212) in Kontakt mit einer Oberfläche (S179) ist, die die Durchgangsöffnung (178) begrenzt, die in der Wand (17G) des Gehäuses (17) ausgebildet ist.

2. Elektromechanischer Aktuator (8) für eine Verdunkelungsvorrichtung (1) nach Anspruch 1, **dadurch gekennzeichnet, dass** die Endkappe (200) ferner eine Armatur (202) umfasst, wobei die Armatur (202) um das Stromversorgungskabel (10) geklemmt ist.

3. Elektromechanischer Aktuator (8) für eine Verdunkelungsvorrichtung (1) nach Anspruch 1 oder nach Anspruch 2, **dadurch gekennzeichnet, dass** das Endstück (200) ferner ein Teil (204) umfasst, wobei das Teil (204) zumindest den Teil mit nicht kreisförmigem Querschnitt (206) des Endstücks (200) und den Schaft (208) des Endstücks (200) bildet, wobei das Teil (204) an dem Stromversorgungskabel (10) fixiert ist.

4. Elektromechanischer Aktuator (8) für eine Verdunkelungsvorrichtung (1) nach einem der Ansprüche 1 bis 3, **dadurch gekennzeichnet, dass** die in der Wand (17G) des Gehäuses (17) gebildete Aufnahme (176) mit nicht kreisförmigem Querschnitt eine Mündung der in der Wand (17G) des Gehäuses (17) gebildeten Durchgangsöffnung (178) bildet, die von der Außenseite (S2) der Wand (17G) des Gehäuses (17) aus gebildet ist.

5. Elektromechanischer Aktuator (8) für eine Abdeckvorrichtung (1) nach Anspruch 4, **dadurch gekennzeichnet, dass** der Teil mit nicht kreisförmigem Querschnitt (206) des Endstücks (200) ein Absatz ist, und dass die Dichtlippe(n) (212) an einem Abschnitt des Schafts (208) bereitgestellt ist (sind), der von dem Teil (209) des Schafts (208) getrennt ist, der aus der Durchgangsöffnung (178) auf der Innenseite (S1) der Wand (17G) des Gehäuses (17) hervorsteht.

6. Elektromechanischer Aktuator (8) für eine Verdunkelungsvorrichtung (1) nach Anspruch 5, **dadurch gekennzeichnet, dass** die oder jede Dichtlippe (212) an dem Schaft (208) in der Nähe des Teils mit nicht kreisförmigem Querschnitt (206) des Endstücks (200) ausgebildet ist.

7. Elektromechanischer Aktuator (8) für eine Abdeckvorrichtung (1) nach einem der Ansprüche 1 bis 6, **dadurch gekennzeichnet,**

**dass** der Schaft (208) an dem Teil (209) des Schafts (208), der aus der Durchgangsöffnung (178) an der Innenseite (S1) der Wand (17G) des Gehäuses (17) hervorsteht, mindestens einen Flanschabschnitt (210) umfasst,
und **dass** das Halteelement (220) zwischen dem oder jedem Flanschabschnitt (210) des Schafts (208) und einem Relief (179A) der Wand (17G) des Gehäuses (17) eingefügt ist, wenn die Spitze (200) mit der Wand (17G) des Gehäuses (17) zusammengesetzt ist.

8. Elektromechanischer Aktuator (8) für eine Verdunkelungsvorrichtung (1) nach einem der Ansprüche 1 bis 7, **dadurch gekennzeichnet, dass** das Halteelement (220) ein elastisch verformbarer Ring zwischen einer ersten Konfiguration, in der sein Innendurchmesser (d220) kleiner als oder gleich wie ein Durchmesser (D208) des Schafts (208) ist, über einen Bereich, der durch den Schaft (208) zum Aufnehmen des Halteelements (220) gebildet ist, und einer zweiten Konfiguration, in der sein Innendurchmesser (d220) strikt größer ist als ein maximaler Durchmesser (D210) des Schafts (208), ist.

9. Verdunkelungsvorrichtung (1), die Verdunkelungsvorrichtung (1) mindestens umfassend:

- eine Schiene (9),
- einen Schirm (2), und
- einen elektromechanischen Aktuator (8) nach einem der Ansprüche 1 bis 8, wobei der elektromechanische Aktuator (8) in der Schiene (9) angeordnet ist, wobei der Schirm (2) durch den elektromechanischen Aktuator (8) in Bewegung versetzt wird.

10. Verfahren zur Montage eines elektromechanischen Aktuators (8) für eine Verdunkelungsvorrichtung (1) nach einem der Ansprüche 1 bis 8, **dadurch gekennzeichnet, dass** das Verfahren mindestens die folgenden Schritte umfasst:

- Einführen von elektrischen Leitern (102, 104, 106, 108) des Stromversorgungskabels (10) in die Durchgangsöffnung (178) in der Wand (17G) des Gehäuses (17), bis der nicht kreisförmige Teil (206) des Endstücks (200) des Stromkabels (10) in der nicht kreisförmigen Aufnahme (176) in der Wand (17G) des Gehäuses (17) aufgenommen ist und die oder jede Dichtlippe (212) die Oberfläche (S179) berührt, die die Durchgangsöffnung (178) in der Wand (17G) des Gehäuses (17) begrenzt, und
- Montieren des Halteelements (220) an dem Teil (209) des Schafts (208), der aus der Durchgangsöffnung (178) auf der Innenseite (S1) der Wand (17G) des Gehäuses (17) hervorsteht, durch axiales Verriegeln der Spitze (200) in Bezug auf die Wand (17G) des Gehäuses (17) in der Position, die am Ende des Einführschritts erreicht wird.

**Claims**

1. An electromechanical actuator (8) for a concealment device (1),

   the electromechanical actuator (8) comprising at least:

   - an electric motor (18),
   - a control unit (19), the control unit (19) being configured to control the electric motor (18),
   - a casing (17), the electric motor (18) and the control unit (19) being housed inside the casing (17),
   - an electrical supply cable (10), the electrical supply cable (10) passing through a wall (17G) of the casing (17) and being electrically connected to the control unit (19), the wall (17G) of the casing (17) having an inner side (S1), facing the inside of the casing (17), and an outer side (S2), facing the outside of the casing (17), the inner side (S1) being opposite the outer side (S2), and
   - a retaining component (220),

   **characterised**
   **in that** the electromechanical actuator (8) further comprises:

   - an end piece (200), the end piece (200) being fixed to the electrical supply cable (10),

   **in that** the casing (17) comprises at least:

   - a housing of non-circular cross-section (176), the non-circular cross-section housing (176) being formed in the wall (17G) of the casing (17), and
   - a through opening (178), the through opening (178) being formed in the wall (17G) of the casing (17),

   **in that** the end piece (200) comprises at least:

   - a non-circular-section portion (206), the non-circular-section portion (206) of the end piece (200) being engaged in the non-circular-section housing (176) formed in the wall (17G) of the casing (17), and
   - a barrel (208), the barrel (208) being engaged in the through opening (178) of the wall (17G) of the casing (17), a part (209) of the barrel (208) extending from the through opening (178) onto the inner side (S1) of the wall (17G) of the casing (17), the retaining component (220) being mounted on the part (209) of the barrel (208),

   and **in that** the barrel (208) carries at least one sealing lip (212), the or each sealing lip (212) being in contact with a surface (S179), delimiting the through opening (178) formed in the wall (17G) of the casing (17).

2. The electromechanical actuator (8) for a concealment device (1) according to claim 1, **characterised in that** the end piece (200) further comprises an armature (202), the armature (202) being clamped around the electrical supply cable (10).

3. The electromechanical actuator (8) for a concealment device (1) according to claim 1 or according to claim 2, **characterized in that** the end piece (200) further comprises a part (204), the part (204) constituting at least the non-circular cross-section part (206) of the end piece (200) and the barrel (208) of the end piece (200), the part (204) being immobilised on the electrical supply cable (10).

4. The electromechanical actuator (8) for a concealment device (1) according to any one of claims 1 to 3, **characterised in that** the non-circular cross-section housing (176) formed in the wall (17G) of the casing (17) constitutes a mouth of the through opening (178) formed in the wall (17G) of the casing (17), from the outer side (S2) of the wall (17G) of the casing (17).

5. The electromechanical actuator (8) for a concealment device (1) according to claim 4, **characterised**

   **in that** the non-circular section (206) of the end-piece (200) is a heel,
   and **in that** the sealing lip or lips (212) are formed on a portion of the barrel (208) distinct from the part (209) of the barrel (208) projecting from the through opening (178) on the inner side (S1) of the wall (17G) of the casing (17).

6. The electromechanical actuator (8) for a concealment device (1) according to claim 5, **characterised in that** the or each sealing lip (212) is provided on the barrel (208), close to the non-circular section part (206) of the end piece (200).

7. The electromechanical actuator (8) for a concealment device (1) according to any one of claims 1 to 6, **characterised**

   **in that** the barrel (208) comprises, on the part (209) of the barrel (208) projecting from the through opening (178) on the inner side (S1) of the wall (17G) of the casing (17), at least one collar portion (210),
   and **in that** the retaining component (220) is interposed between the or each flange portion (210) of the barrel (208) and a relief (179A) of the wall (17G) of the casing (17), when the end piece (200) is assembled with the wall (17G) of the casing (17).

8. The electromechanical actuator (8) for a concealment device (1) according to any one of claims 1 to 7, **characterised in that** the retaining component (220) is an elastically deformable ring, between a first configuration, in which its internal diameter (d220) is less than or equal to a diameter (D208) of the barrel (208), over a zone formed by the barrel (208) for receiving the retaining component (220), and a second configuration, in which its internal diameter (d220) is strictly greater than a maximum diameter (D210) of the barrel (208).

9. A concealment device (1), the concealment device (1) comprising at least:

   - a rail (9),
   - a screen (2), and
   - an electromechanical actuator (8) according to any one of claims 1 to 8, the electromechanical actuator (8) being arranged inside the rail (9), the screen (2) being driven in movement by the electromechanical actuator (8).

10. A method for controlling an electromechanical actuator (8) for a concealment device (1) according to any of claims 1 to 8, **characterised in that** the method includes at least the following steps:

   - inserting electrical conductors (102, 104, 106, 108) of the electrical supply cable (10) into the through opening (178) formed in the wall (17G) of the casing (17), until the non-circular-section part (206) of the end piece (200) of the electrical supply cable (10) is received in the non-circular-section housing (176) formed in the wall (17G) of the casing (17) and the or each sealing lip (212) is in contact with the surface (S179), delimiting the through opening (178) formed in the wall (17G) of the casing (17), and
   - mounting the retaining component (220) on the part (209) of the barrel (208) projecting from the through opening (178) on the inner side (S1) of the wall (17G) of the casing (17), axially locking the end piece (200) with respect to the wall (17G) of the casing (17), in the position reached at the end of the inserting step.

**EP 4 202 173 B1**

FIG.1

FIG.2

FIG.3

FIG.4

EP 4 202 173 B1

FIG.5

FIG.6

EP 4 202 173 B1

EP 4 202 173 B1

FIG.8

EP 4 202 173 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0844633 A2

- EP 1764474 A1